# EUROPEAN PATENT SPECIFICATION

(11) **EP 0 608 141 B1**
(45) Date of publication and mention of the grant of the patent: **23.07.1997**
(21) Application number: 94300453.1
(22) Date of filing: 21.01.1994
(51) Int. Cl.: G01B 5/28, E01C 23/01

(54) **Surface level checking apparatus**
Oberflächeniveaukontrollapparat
Dispositif de contrôle de niveau de surface

(30) Priority: 22.01.1993 GB 9301201
(43) Date of publication of application: 27.07.1994
(73) Proprietor: British Gas plc, London SW1V 3JL (GB)
(72) Inventor: Kiely, John Roger, Keynsham, Bristol BS18 1BT (GB)

(56) References cited:
- FR-A- 2 463 389
- US-A- 3 983 632
- US-A- 4 442 608
- WEGEN vol. 48, no. 6 , June 1974 pages 159 - 168 TEN CATE ET AL. 'Een nieuwe methode voor het meten van rijsporen op wegen'

## Description

The present invention relates to apparatus for checking the level of a surface region and, more particularly but not exclusively, to apparatus for checking the level of surface regions which form part of a reinstated area in the ground, such as in a road or walkway.

Following, for example, the digging of holes or trenches in roads or walkways in order to carry out repairs to pipelines or cables located in the ground or to install new equipment, the excavated areas have to be reinstated after the work is completed.

It is often the case that because of the position of the reinstated area the reinstatement has to be in accord with various standards or regulations regarding, for example, the level or profile of the surface of the reinstated area.

FR-A-2 463 389 discloses an apparatus for measuring the level of a surface using a dial to indicate the level measurement.

An object of the present invention is to provide an apparatus which can be used to check the level of a region of a surface.

To this end the apparatus comprises an elongate member having a measuring scale therealong; support members on the elongate member for engaging the surface and spacing the elongate member generally opposite the region to be checked; and a measuring gauge comprising a holder which is mountable on and movable in a guided manner along the elongate member, a graduated member having a surface for engaging the surface region and being mounted in the holder so as to be guidably movable therethrough in opposite directions and transversely to the elongate member when the holder is mounted on the elongate member, and means for temporarily holding the graduated member fixed in the same position relative to the holder as when the graduated member engages the surface region, the holder together with the held graduated member being removable from the elongate member without disturbing the relative positions of the holder and the graduated member.

This apparatus allows the user to remove the measuring gauge from the elongate member and inspect the gauge closely in a comfortable position. If the measuring gauge was not removable the user might have to bend, or kneel or lie on the ground, in order to be able to inspect the gauge closely.

Conveniently, the holder rests freely on the elongate member and is slidable therealong, with the holder being liftable off the elongate member for removal therefrom. The holder may, for example, comprise a hook-like portion which enables the holder to be hung over the elongate member. The hook-like portion may form part of a guide means to enable the holder to slide in the guided manner along the elongate member.

The graduated member may conveniently be generally in the form of a rod with graduations marked along at least part of its length, with the rod being located in and movable through an aperture defined by the holder.

The holding means, which may comprise the material of the holder itself, may temporarily hold the graduated member by virtue of the graduated member being a sliding friction fit or sliding interference fit with respect to the holding means. In such an arrangement, the friction between the graduated member and the holding means is sufficient to hold the graduated member temporarily fixed in position in the holder in the absence of a force urging the graduated member to slide to a new position.

Conveniently, the apparatus is provided with stop means to limit the extent of movement of the graduated member through the holder in opposite directions, so as to prevent accidental separation of the graduated member from the holder during normal use.

Preferably, the support members are locatable on and movable along the elongate member and include means for temporarily securing the support members in different positions along the elongate member.

In some instances it may be found that the elongate member is insufficient in length to bridge or extend across a reinstated area. With this kind of situation in mind the apparatus may further comprise: a joiner piece, one end portion of which is secured or securable to an end of the elongate member; and a further elongate member to which the other end portion of the joiner piece is securable or secured,with the further elongate member forming an extension along which the holder can be moved.

If necessary or if desired, the apparatus may comprise a plurality of joiner pieces, and a plurality of such further elongate members which are securable together and to the main elongate member.

The invention will now be described, by way of example only, with reference to the accompanying drawings, in which:-
Figure 1 is a perspective view, but with a small cut away portion, of one embodiment of the apparatus according to the invention,
Figure 2 is an enlarged perspective view of the measuring gauge comprising the holder and the graduated member,
Figure 3 is a cross-sectional view of the measuring gauge shown in Figure 2,
Figure 4 is an end view of one of the supporting members located on the elongate member in Figure 1 and associated screw,
Figure 5 is a perspective view of one form of joiner piece,
Figure 6 shows the elongate member and a further elongate member connected together by the joiner piece,
Figure 7 illustrates the apparatus in use, and
Figure 8 shows a template for use with the apparatus to facilitate making a mark on the ground in a predetermined position with respect to a support member.

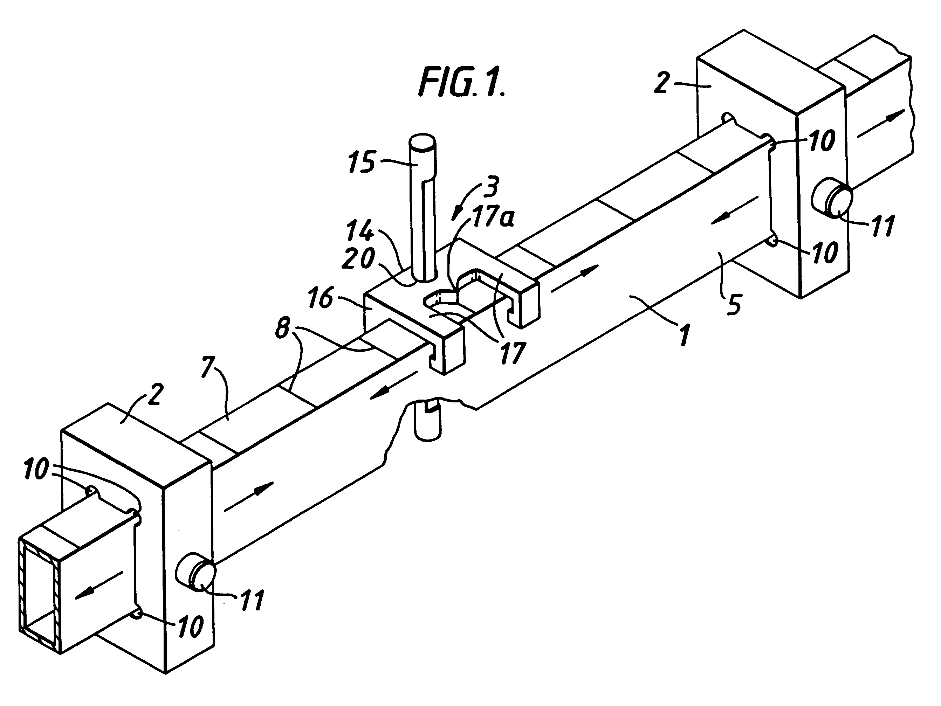

With reference to Figures 1 to 4, the apparatus comprises basically an elongate member 1 and two support members 2 and a measuring gauge 3 slidably mounted on the elongate member. The elongate member 1 is in the form of a rectilinear tubular beam of rectangular cross-section. The beam 1 has a lower surface 4, two side surfaces 5,6 and an upper surface 7 which has a measuring or graduated scale 8 thereon along the length of the beam. The scale may, for example, be marked at 50mm intervals. The two support members 2 are generally in the form of rectangular annular blocks defining openings 9 via which they are located on the beam.

The support blocks 2 are fairly close fits on the beam 1 for stability purposes but are readily slidable along the beam. The junctions between internal surfaces of the blocks have been removed as at 10 to facilitate sliding of the blocks on the beam. The blocks are for engaging the ground and supporting the beam above the area of ground which is to be checked.

The beam may, for example, be made of anodised aluminium and the support blocks may, for example, be made of a suitable plastics material, such Nylon.

Screws 11 are screwable into threaded holes 12 in the support blocks so that when the blocks 2 have been slid to desired locations along the beam 1 the screws can be tightened against side surface 5 of the beam so as to secure the support blocks temporarily in those locations. At least the inner ends 13 of the screws 11 are conveniently of a softer material than that of the beam. For example, where the beam is made of aluminium the ends of the screws may be made of a suitable plastics material.

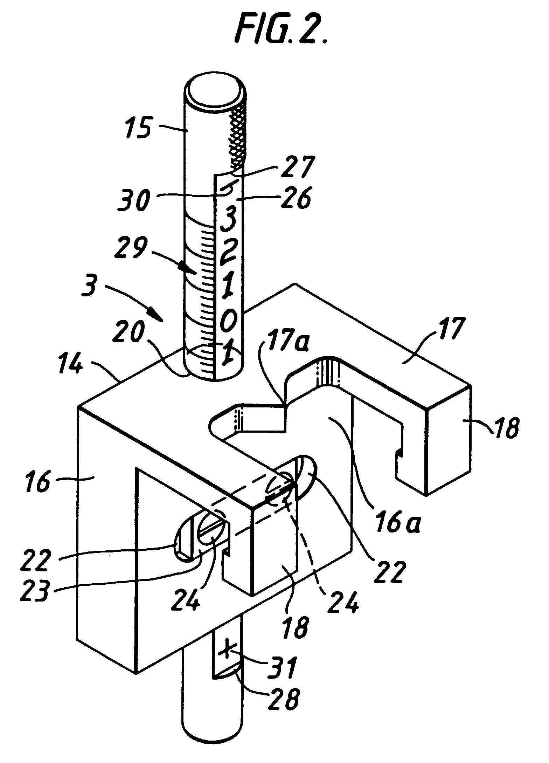

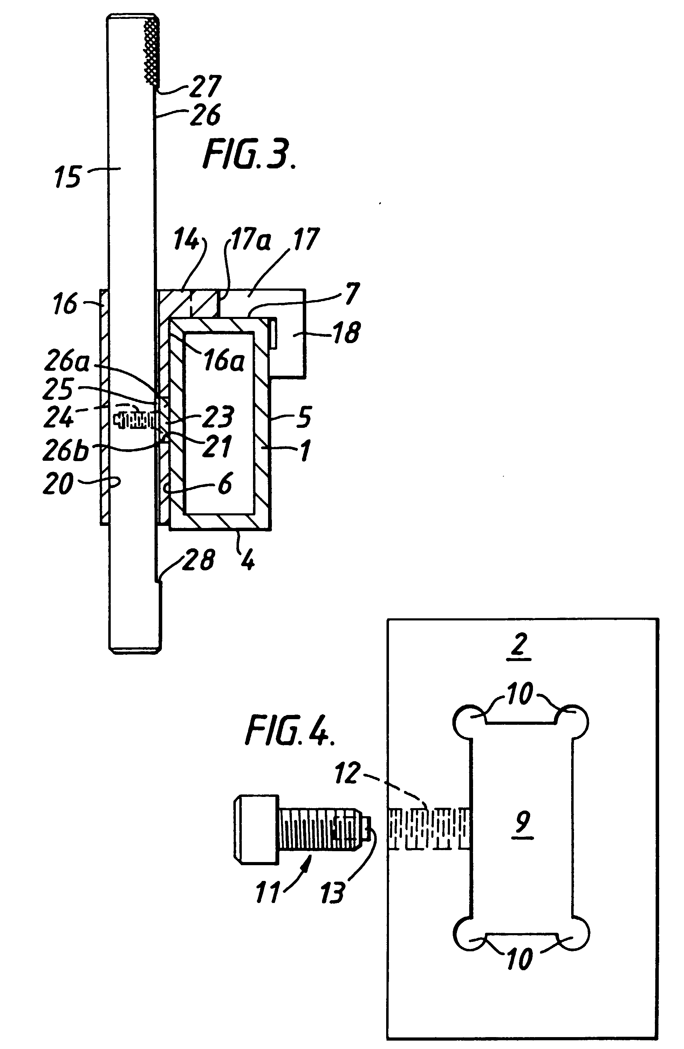

The measuring gauge 3 comprises a holder 14 and a graduated member 15, as can be seen more clearly in Figures 2 and 3.

The holder has a body part 16, generally of rectangular block form, a flat bridge part 17 that extends perpendicularly from the upper end of one side surface 16a of the body part, and a pair of lugs 18 which extend downwardly from the end of the bridge part remote from the body part.

When the holder 14 is mounted on the beam 1, the side surface 16a of the body part 16 lies substantially against side surface 6 of the beam, the bridge part 17 extends across and rests on the upper surface 7 of the beam, and the lugs 18 extend a small distance down the other side surface 5 of the beam. The bridge part 17 and lugs 18 may be viewed as providing the holder with a hook-like portion which enables the holder to be hung on the beam. The bridge part 17 has an open portion which enables the graduation markings 8 on the upper surface 7 of the beam to be viewed, and a part in the form of a pointer 17a at the edge of the open portion so that the position of the holder 14 along the beam can easily be read off against the graduation markings.

The holder 14 is designed so as to be stable on the beam 1 and dimensioned so as to be a fairly close sliding fit on the beam. The lugs 18 and the side surface 16a of the body part adjacent the side surface 6 of the beam serve as guide means to enable the holder 14 to slide in a guided manner along the beam

As viewed in Figures 2 and 3, the material of the body part defines a bore 20 of substantially circular cross section which extends vertically from the top to the bottom of the body part 16.

The side surface 16a of the body part has an opening 21 which extends from the surface to the bore 20 about mid-way therealong. Merging with and to each side of the opening 21 there is a recess 22 for accommodating an insert 23 which is secured by screws 24 to the body part 16. The insert includes a rectangular portion 25 that projects to a small extent through the opening 21 into the bore 20. The purpose of the rectangular portion will be described later. It will be appreciated that it is preferable that the screws 24 and the insert 23 do not project above the surface 16a and thus do not interfere with the ability of the holder 14 to slide along the beam 1.

The graduated member 15 is generally in the form of a straight cylindrical solid rod made, for example, of steel, but having an elongate flat portion 26 which extends longitudinally of the rod and terminates before the ends of the rod. At each end of the flat portion a shoulder 27,28 is formed at the junction with the cylindrical end portions of the rod.

The rod 15 bears graduation markings 29, for example in millimetres and centimetres, extending in opposite directions away from a zero or 'O' marking which is on the flat portion 26. The markings extending upwardly from the zero marking 'O' (as viewed in Figure 2) are indicated at 30 as being part of a negative scale and those markings below the 'O' marking are indicated at 31 as being part of a positive scale. The flat portion 26 of the rod may conveniently bear reference numbers relating to the graduations.

The cross sectional dimensions of the bore and graduated rod are such that the rod is a close sliding friction fit in the bore of the body part.

The graduated rod 15 is initially mounted in the bore 20 in the body part 16 of the holder 14 before the insert 23 is secured in position to extend into the bore. Once the rod is in the bore it is turned, if necessary, so that the flat portion 26 is squarely facing the opening 21, and then the insert is screwed into position so that the rectangular portion 25 projects into the bore.

Due to the presence of the insert portion 25 in the bore the rod is substantially prevented from turning. Thus the rod 15 always faces substantially the same way. Also, when the rod is slid through the body part 16 to either of the ends of the flat portion the shoulders 27 and 28 serve as stop means which engage opposite respective sides 26a,26b of the insert portion 26 extending into the bore 20. This limits the extent of movement of the graduated rod 15 through the holder in opposite directions and prevents accidental separation of the graduated rod from the holder.

During use of the apparatus the friction between the graduated rod 15 and the material of the body part 16 defining the bore 20 is sufficient to hold the rod temporarily fixed in position in the holder 14, in the absence of a force urging the rod to slide to a new position in the holder.

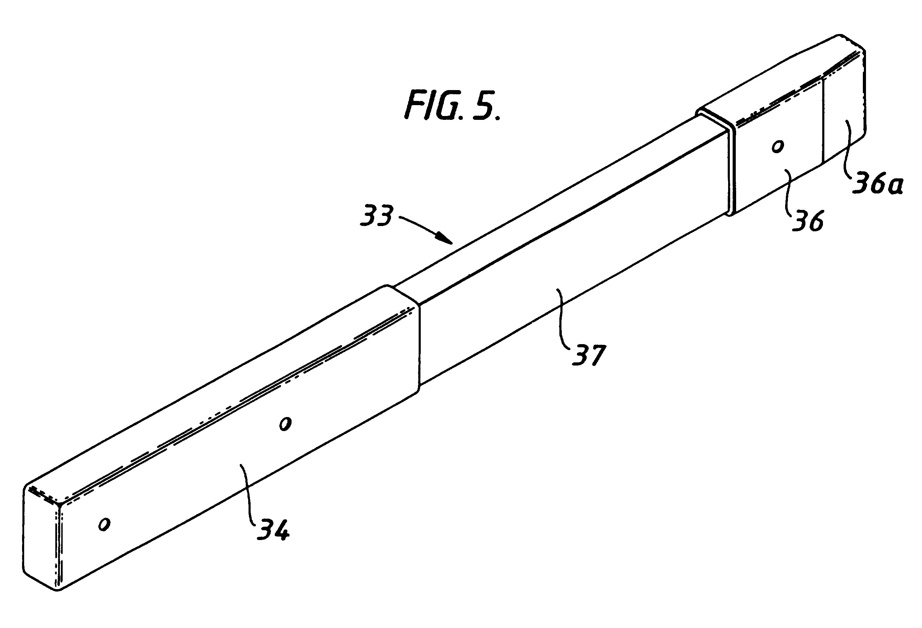

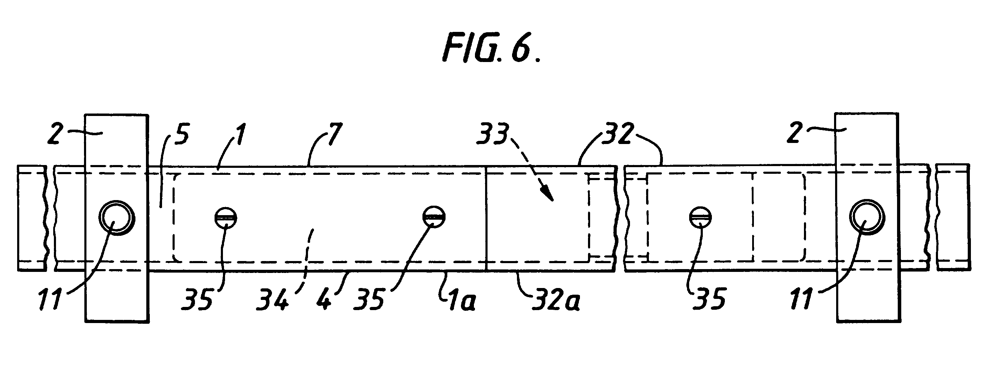

The length of the beam 1 provided with the apparatus may, for example, be up to about one metre and be relatively portable and be carried in a boot of a car. However, it will be appreciated that in some circumstances a much longer beam length may be required. Instead of the user having also to transport a single much longer length of beam, the apparatus may be provided as a kit of parts which in addition to the parts described above in relation to Figures 1 to 4, may also comprise, as indicated in Figures 5 and 6 a further beam 32 similar in length to that of the main beam 1 and a joiner piece 33 for use in securing the beam 1 and the further beam 32 together in end to end relationship. The internal and external shape and dimensions of the further beam are the same as those of the beam.

As illustrated, the joiner piece 33, which may conveniently be made of a suitable plastics material, has one end portion 34 shaped and dimensioned so as to be a close or tight fit into one hollow end la of the beam by means of screws 35 which screw through the side wall 5 of the beam into the joiner piece. The other end portion 36 of the joiner piece is shaped and dimensioned so as to be a close or tight fit in a hollow end 32a of the further beam. One or more screws 35 may also be used to secure the joiner piece to the further beam.

The close fitting and securing are required to ensure a good rigid strong connection between the two beams. The joiner piece shown in Figure 5 also has a region 37 of reduced cross section to lessen the force required to push the joiner piece and the further beam together.

The outer end of the other end portion 36 may be tapered as at 36a to facilitate its introduction into the end 32a of the further beam.

As acquired for use, the main, normally used beam 1 may permanently be secured to the end portion 34 of the joiner piece 33, with the further beam 32 being added to and then removed from the other end portion 36 of the joiner piece, as required.

Alternatively, the further beam 32 may permanently be secured to the end portion 34 of the joiner piece (not shown). This combination may be added to the main beam 1, as required, by pushing the other end portion 36 into end 1a of the main beam (not shown). From the above it will be appreciated that where it is desired that there should be a permanent connection to one of the beams it is more appropriate permanently to secure the end portion 34 of the joiner piece 33 to one or other of the beams 1 or 32, whilst it is more appropriate temporarily to secure the other end portion 36 of the joiner piece to the remaining one of the beams.

Although not shown, the measuring scale along the main beam 1 is continued along the intended upper surface of the further beam 32 which is to form an extension of the main beam.

In the presently described embodiment, the heads of the screws 35 are either level with or a little beneath the side surfaces of the beams so that the nearer one of the two support members to the further beam is slidable along to the end of the beam 1 and onto and along the further beam 32 to the required position.

The holder 14 together with the held graduated rod 15 is also slidable from the beam 1 onto the connected further beam 32.

The apparatus may comprise a plurality of joiner pieces 33 and a plurality of further beams 32 securable together and to the main beam 1 (not shown).

It will be appreciated that any of the apparatus forms described above may be supplied as a kit-of-parts to be assembled together.

End caps (not shown) may be provided to fit on and cover the open ends of the beams.

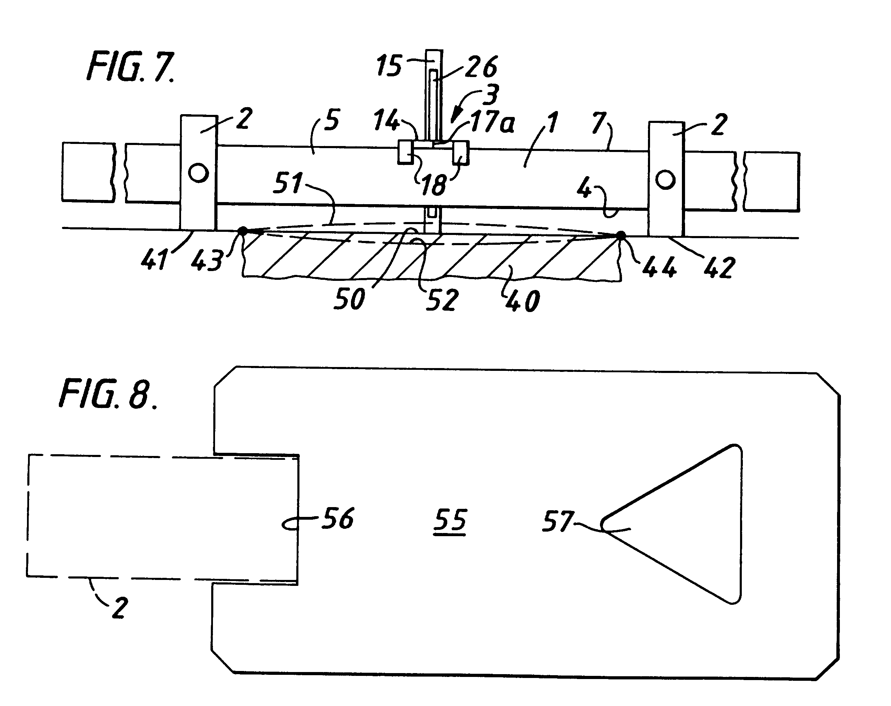

Use of the apparatus by an operator will now be described with reference to Figure 7 which shows the apparatus comprising a single beam 1, but it should be understood that the description is equally applicable to the use of apparatus in which one or more further beams have been connected to the main beam in the manner described above.

When it is desired to check the level or height of a region of a reinstated area of ground 40 the support members 2 are slid along the beam so that they can rest on the ground 41,42 to each side of and close to the junctions 43,44 with the reinstated area 40.

The holder 14 together with the held calibrated rod 15 is hung on the beam 1 and slid along to a selected position on the beam so that the rod is above the surface region of reinstated area to be checked. The operator then presses the rod down by hand so that the bottom end surface of the rod contacts the chosen region of ground. The holder is then lifted up directly from that selected position on the beam.

Since the friction between the rod 15 and holder 14 is sufficient temporarily to hold the rod fixed in the same position relative to the holder as it was in when it was contacting the ground and since the holder can be lifted off the beam without disturbing the relative position of the holder and the rod, the measurement gauge can be inspected more easily and closer to the eyes. The reading is taken by noting the calibration line on the rod that is in alignment with the top surface of the holder 14a.

The present apparatus is constructed so that if the reading indicates the 'O' mark then the level of the surface region contacted by the rod is in a plane common with both the two areas of ground on which the two support members 2 stand. This 'O' reading would be obtained if the apparatus was placed on perfectly flat ground, as indicated at 50 in Figure 7.

If the reading obtained is one to the positive side of the 'O' mark then the reading indicates that the area checked is at a higher level, that is at a level closer to the lower side of the beam than the bases of the support members. A positive reading would be obtained if there is surface crowning in the reinstated area as indicated at 51 in Figure 7.

On the other hand, if the reading obtained is one to the negative side of the 'O' mark on the calibrated rod, then the reading indicates that the checked areas is at a level lower than the mean level of the original ground surface adjacent to the edges of the reinstated area. Such a negative reading would be obtained if there is a surface depression within the reinstated area as indicated at 52 in Figure 7.

If desired or so that the test can be repeated in the same place at a later date a note may be taken of the positions of the two support members 2 on the beam 1 and, prior to removal, of the position of the holder 14 on the beam by checking the measurement on the beam which is aligned with the pointer 17a. In addition, the positions of the support members on the ground can be indicated by using the template 55 shown in Figure 8. The template, which may be made of aluminium sheet, comprises a recess 56 dimensioned to fit closely around the bottom of each support member (shown in dotted outline).

With the template 55 fitted against the support members, in turn, paint or the like is applied to the ground through the triangular aperture 57 in the template to leave triangular marks associated with the positions of the two support members. To position the support members in their original positions at a later date the triangular aperture 57 is placed over and aligned with each of the triangular marks, in turn, and the supporting members are then located in the recess portion.

One or more of the templates 55 may form part of the kit-of-parts of the apparatus.

It will be appreciated that the above described apparatus can readily be transported in a car boot, for example, from site to site, and be used to check and recheck whether reinstated areas in the ground meet surface level or profile requirements. The apparatus is lightweight, robust, of relatively simple design with few components and may be made for relatively low cost.

Whilst a particular embodiment has been described above, it will be appreciated that various modifications may be made without departing from the scope of the invention. For example, instead of the graduated member being calibrated in specific measurements, the graduated member may be provided merely with markings indicating the limits of ranges of measurements acceptable in relation to the reinstatements to be checked with the apparatus.

## Claims

1. Apparatus for checking the level of a region of a surface, comprising an elongate member (1) having a measuring scale (8) therealong; support members (2) on the elongate member for engaging the surface and spacing the elongate member generally opposite the region to be checked; and a measuring gauge (3) comprising a holder (14) which is mountable on and movable in a guided manner along the elongate member (1), a graduated member (15) having a surface for engaging the surface region and being mounted in the holder so as to be guidably movable therethrough in opposite directions and transversely to the elongate member when the holder is mounted on the elongate member, and means (16) for temporarily holding the graduated member (15) fixed in the same position relative to the holder as when the graduated member engages the surface region, the holder (14) together with the held graduated member being removable from the elongate member (1) without disturbing the relative positions of the holder and the graduated member.

2. Apparatus as claimed in claim 1, in which the holder (14) rests on the elongate member (1) and is slidable therealong, and in which the holder is liftable off the elongate member for removal therefrom.

3. Apparatus as claimed in claim 2, in which the holder comprises a hook-like portion (17, 18) which enables the holder to be hung over the elongate member.

4. Apparatus as claimed in claim 3, in which the hook-like portion forms part of a guide means to enable the holder to slide in the guided manner along the elongate member.

5. Apparatus as claimed in any of the preceding claims, in which the graduated member (15) is generally in the form of a rod with graduations (29) marked along at least part of its length.

6. Apparatus as claimed in any of the preceding claims, in which the holder (14) defines an aperture (20) through which the graduated member (15) is movable.

7. Apparatus as claimed in any of the preceding claims, in which the holding means (16) provides a sliding friction fit for the graduated member (15) in the holder (14).

8. Apparatus as claimed in claims 6 and 7, in which the material of the holder (14) provides the holding means (16) by defining the aperture (20) such that the graduated member (15) is a sliding friction fit therein.

9. Apparatus as claimed in any of the preceding claims, in which stop means (27, 28) are provided to limit the extent of movement of the graduated member (15) through the holder (14) in the opposite directions.

10. Apparatus as claimed in claim 9, in which the stop means comprises shoulders (27, 28) on the graduated member (15) which co-operate with surfaces provided by the holder (14).

11. Apparatus as claimed in claim 10, in which the shoulders (27, 28) are provided at opposite ends of a flat portion (26) provided on and extending longitudinally of the graduated member (15).

12. Apparatus as claimed in any of the preceding claims, in which the support members (2) are locatable on and movable along the elongate member (1) and include means (11) for temporarily securing the support members in different positions along the elongate member.

13. Apparatus as claimed in claim 12, in which each support member (2) is of annular form defining an opening (9) via which the support is located on and slidable along the elongate member.

14. Apparatus as claimed in claims 12 or 13, in which the securing means (11) comprises screw means which are screwable through threaded holes (12) in the support members (2) to engage the elongate member.

15. Apparatus as claimed in claim 14, in which the ends (13) of the screws (11) for engaging the elongate member are made of a material which is softer than that of the elongate member.

16. Apparatus as claimed in any of the preceding claims, in which the elongate member (1) is of rectilinear form.

17. Apparatus as claimed in any of the preceding claims, in which the elongate member (1) has open hollow ends.

18. Apparatus as claimed in claim 17, in which the elongate member (1) is in the form of a tube.

19. Apparatus as claimed in any of the preceding claims, in which the surface portion (7) of the elongate member (1) intended to be remote from the surface region to be checked bears the measuring scale (8).

20. Apparatus as claimed in any of the preceding claims, further comprising; a joiner piece (33), one end portion (34) of which is secured or securable to an end of the elongate member (1); and a further elongate member (32) to which the other end portion (36) of the joiner piece is securable or secured to form an extension of the elongate member along which the holder can be moved.

21. Apparatus as claimed in claim 20, in which when the support members (2) are locatable on and movable along the elongate member (1), at least one of the support members (2) is movable onto and along the further elongate member (32).

22. Apparatus as claimed in claim 20 or 21, in which both the, and the further, elongate members (1, 32) have hollows in their ends, and in which the joiner piece (33) is adapted to be a friction fit in opposing hollow ends.

23. Apparatus as claimed in claim 20, 21 or 22, comprising a plurality of joiner pieces (33) and a plurality of further elongate members (32) securable together and to the main elongate member (1).

24. A kit of parts comprising parts which are designed to be assembled to form apparatus as claimed in any of claims 1 to 19.

## Patentansprüche

1. Gerät zum Überprüfen des Niveaus eines Oberflächenbereiches, mit einem langgestreckten Bauteil (1), das eine längs angeordnete Skala (8) aufweist; mit Tragbauteilen (2) am langgestreckten Bauteil zum Aufsetzen auf der Oberfläche und zum Beabstanden des langgestreckten Bauteils allgemein gegenüber dem zu überprüfenden Bereich; und mit einer Meßlehre (3), die einen Halter (14) aufweist, der auf dem langgestreckten Bauteil (1) angebracht und entlang demselben bewegbar geführt ist; mit einem skalierten Bauteil (15), das eine Fläche zum Aufsetzen auf dem Oberflächenbereich aufweist und im Halter so sitzt, daß es durch diesen hindurch in entgegengesetzten Richtungen und quer zum langgestreckten Bauteil beweglich geführt ist, wenn der Halter am langgestreckten Bauteil angebracht ist; und mit einer Einrichtung (16) zum vorübergehenden Festhalten des skalierten Bauteils (15) in der gleichen Stellung relativ zum Halter wie wenn das skalierte Bauteil mit dem Oberflächenbereich in Wirkverbindung steht, wobei der Halter (14) zusammen mit dem festgehaltenen skalierten Bauteil vom langgestreckten Bauteil (1) ohne Störung der Relativstellungen des Halters und des skalierten Bauteils abnehmbar ist.

2. Gerät nach Anspruch 1, bei dem der Halter (14) auf dem langgestreckten Bauteil (1) ruht und entlang diesem gleitbar ist, und bei dem der Halter vom langgestreckten Bauteil zum Entfernen von diesem abhebbar ist.

3. Gerät nach Anspruch 2, bei dem der Halter ein hakenartiges Teilstück (17, 18) aufweist, mit dem der Halter über das langgestreckte Bauteil gehängt werden kann.

4. Gerät nach Anspruch 3, bei dem das hakenförmige Teilstück einen Teil einer Führungseinrichtung bildet, damit der Halter entlang dem langgestreckten Bauteil geführt gleiten kann.

5. Gerät nach einem der vorangehenden Ansprüche, bei dem das skalierte Bauteil (15) die Form eines Stabes mit Skalierungen (29) entlang mindestens einem Teil seiner Länge hat.

6. Gerät nach einem der vorangehenden Ansprüche, bei dem der Halter (14) eine Öffnung (20) bildet, durch welche hindurch das skalierte Bauteil (15) bewegbar ist.

7. Gerät nach einem der vorangehenden Ansprüche, bei dem die Halteeinrichtung (16) einen Gleitreibungssitz für das skalierte Bauteil (15) im Halter (14) vorsieht.

8. Gerät nach Anspruch 6 und 7, bei dem das Material des Halters (14) die Halteeinrichtung (16) durch Bildung der Öffnung (20) in der Weise vorsieht, daß das skalierte Bauteil (15) darin einen Gleitreibungssitz bildet.

9. Gerät nach einem der vorangehenden Ansprüche, bei dem Anschläge (27, 28) vorgesehen sind, um das Ausmaß der Bewegung des skalierten Bauteils (15) im Halter (14) in den entgegengesetzten Richtungen zu begrenzen.

10. Gerät nach Anspruch 9, bei dem die Anschläge Schultern (27, 28) am skalierten Bauteil (15) sind, die mit Flächen des Halters (14) zusammenwirken.

11. Gerät nach Anspruch 10, bei dem die Schultern (27, 28) an entgegengesetzten Enden einer sich längsseits erstreckenden Abflachung (26) des skalierten Bauteils (15) vorgesehen sind.

12. Gerät nach einem der vorangehenden Ansprüche, bei dem die Tragbauteile (2) auf dem langgestreckten Bauteil (1) anbringbar und entlang demselben bewegbar sind und eine Einrichtung (11) zum vorübergehenden Befestigen der Tragbauteile in unterschiedlichen Stellungen entlang dem langgestreckten Bauteil enthalten.

13. Gerät nach Anspruch 12, bei dem jedes Tragbauteil (2) eine Ringform hat, die eine Öffnung (9) bildet, über die das Tragbauteil auf dem langgestreckten Bauteil sitzt und entlang demselben verschiebbar ist.

14. Gerät nach Anspruch 12 oder 13, bei dem die Befestigungseinrichtung (11) Schrauben sind, die durch Gewindebohrungen (12) in den Tragbauteilen (2) hindurch verschraubbar sind, um am langgestreckten Bauteil anzugreifen.

15. Gerät nach Anspruch 14, bei dem die Enden (13) der Schrauben (11) für den Angriff am langgestreckten Bauteil aus einem Material bestehen, das weicher ist als das des langgestreckten Bauteils.

16. Gerät nach einem der vorangehenden Ansprüche, bei dem das langgestreckte Bauteil (1) rechteckig ausgebildet ist.

17. Gerät nach einem der vorangehenden Ansprüche, bei dem das langgestreckte Bauteil (1) offene Hohlenden hat.

18. Gerät nach Anspruch 17, bei dem das langgestreckte Bauteil (1) die Form eines Rohres hat.

19. Gerät nach einem der vorangehenden Ansprüche, bei dem dasjenige Oberflächenteilstück (7) des langgestreckten Bauteils (1), das dem zu überprüfenden Oberflächenbereich abgelegen sein soll, die Meßskala (8) trägt.

20. Gerät nach einem der vorangehenden Ansprüche mit folgenden weiteren Merkmalen: ein Verbindungsstück (33), von dem das eine Endteilstück (34) an einem Ende des langgestreckten Bauteils (1) befestigt oder befestigbar ist; ein weiteres langgestrecktes Bauteil (32), an dem das andere Endteilstück (36) des Verbindungsstücks befestigt oder befestigbar ist, um eine Verlängerung des langgestreckten Bauteils zu bilden, entlang welcher der Halter bewegt werden kann.

21. Gerät nach Anspruch 20, bei dem, wenn die Tragbauteile (2) auf dem langgestreckten Bauteil (1) sitzen und entlang demselben bewegbar sind, zumindest eines der Tragbauteile (2) auf das weitere langgestreckte Bauteil (32) und entlang demselben bewegbar ist.

22. Gerät nach Anspruch 20 oder 21, bei dem sowohl das als auch das weitere langgestreckte Bauteil (1, 32) in ihren Enden Höhlungen aufweisen, in denen das Verbindungsstück (33) mit Reibungssitz in entgegengesetzten hohlen Enden aufgenommen werden soll.

23. Gerät nach Anspruch 20, 21 oder 22, mit einer Vielzahl von Verbindungsstücken (33) und einer Vielzahl von weiteren langgestreckten Bauteilen (32), die aneinander und an dem langgestreckten Hauptbauteil (1) befestigbar sind.

24. Werkzeugtasche mit Teilen, die zur Bildung des Gerätes nach einem der Ansprüche 1 bis 19 zusammenzusetzen sind.

## Revendications

1. Appareil de vérification du niveau d'une région d'une surface, comprenant un élément allongé (1) ayant une graduation de mesure (8) sur sa longueur ; des éléments de support (2) placés sur l'élément allongé et destinés à être mis en appui contre la surface et à mettre à distance l'élément allongé sensiblement en face de la région devant être vérifiée ; et une jauge de mesure (3) comprenant un support (14) qui peut se monter sur et être mobile de manière guidée le long de l'élément allongé (1), un élément gradué (15) ayant une surface destinée à prendre appui sur la région de la surface et qui est monté dans le support de manière à être mobile de façon guidée dans celui-ci en sens opposés et perpendiculairement à l'élément allongé lorsque le support est monté sur l'élément allongé et un moyen (16) pour tenir temporairement l'élément gradué (15) fixé à la même position par rapport au support que lorsque l'élément gradué est en appui contre la région de la surface, le support (14) ainsi que l'élément gradué tenu pouvant être enlevés de l'élément allongé (1) sans déranger les positions relatives du support et de l'élément gradué.

2. Appareil selon la revendication 1, dans lequel le support (14) repose sur l'élément allongé (1) et peut coulisser le long de ce dernier et dans lequel le support peut être soulevé pour être éloigné de l'élément allongé pour son enlèvement.

3. Appareil selon la revendication 2, dans lequel le support comprend une partie en crochet (17, 18) qui permet au support d'être accroché sur l'élément allongé.

4. Appareil selon la revendication 3, dans lequel la partie en crochet fait partie d'un moyen de guidage destiné à permette au support de coulisser de manière guidée le long de l'élément allongé.

5. Appareil selon l'une quelconque des revendications précédentes, dans lequel l'élément gradué (15) est sensiblement en forme d'une tige comportant des graduations (29) réalisées le long d'au moins une partie de sa longueur.

6. Appareil selon l'une quelconque des revendications précédentes, dans lequel le support (14) comporte un trou (20) dans lequel l'élément gradué (15) est déplaçable.

7. Appareil selon l'une quelconque des revendications précédentes, dans lequel le moyen de support (16) assure un ajustement de glissement à frottement de l'élément gradué (15) dans le support (14).

8. Appareil selon les revendications 6 et 7, dans lequel la matière du support (14) constitue le moyen de support (16) en délimitant le trou (20) de manière que l'élément gradué (15) y soit ajusté à coulissement à frottement.

9. Appareil selon l'une quelconque des revendications précédentes, dans lequel des moyens de butée (27, 28) sont prévus pour limiter la longueur du mouvement de l'élément gradué (15) dans le support (14) en sens opposés.

10. Appareil selon la revendication 9, dans lequel les moyens de butée comprennent des épaulements (27, 28) situés sur l'élément gradué (15) et coopérant avec des surfaces présentées par le support (14).

11. Appareil selon la revendication 10, dans lequel les épaulements (27, 28) sont réalisés aux extrémités opposées d'une partie plate (26) réalisée et disposée longitudinalement sur l'élément gradué (15).

12. Appareil selon l'une quelconque des revendications précédentes, dans lequel les éléments de support (2) peuvent être placés sur et être déplacés le long de l'élément allongé (1) et comprennent des moyens (11) pour fixer temporairement les éléments de support à différentes positions le long de l'élément allongé.

13. Appareil selon la revendication 12, dans lequel chaque élément de support (2) est de forme annulaire délimitant un trou (9) par lequel le support est positionné sur et peut coulisser le long de l'élément allongé.

14. Appareil selon la revendication 12 ou 13, dans lequel le moyen de fixation (11) comprend des moyens à vis qui peuvent se visser dans des trous taraudés (12) réalisés dans les éléments de support (2) de manière qu'ils prennent appui contre l'élément allongé.

15. Appareil selon la revendication 14, dans lequel les extrémités (13) des vis (11) destinée à prendre appui contre l'élément allongé sont réalisées en une matière qui est plus molle que celle de l'élément allongé.

16. Appareil selon l'une quelconque des revendications précédentes, dans lequel l'élément allongé (1) est de forme rectiligne.

17. Appareil selon l'une quelconque des revendications précédentes, dans lequel l'élément allongé (1) comporte des extrémités creuses ouvertes.

18. Appareil selon la revendication 17, dans lequel l'élément allongé (1) est en forme d'un tube.

19. Appareil selon l'une quelconque des revendications précédentes, dans lequel la partie de surface (7) de l'élément allongé (1) destinée à être distante de la région de la surface devant être vérifiée porte la graduation de mesure (8).

20. Appareil selon l'une quelconque des revendications précédentes, comprenant par ailleurs une pièce d'assemblage (33) dont une partie d'extrémité (34) est fixée ou peut être fixée à une extrémité de l'élément allongé (1) et un autre élément allongé (32) auquel l'autre partie d'extrémité (36) de la pièce d'assemblage peut être fixée ou est fixée de manière à former un prolongement de l'élément allongé le long duquel le support peut être déplacé.

21. Appareil selon la revendication 20, dans lequel, lorsque les éléments de support (2) peuvent être placés sur et déplacés le long de l'élément allongé (1), au moins l'un des éléments de support (2) est mobile sur et le long de l'autre élément allongé (32).

22. Appareil selon la revendication 20 ou 21, dans lequel aussi bien l'élément allongé que l'autre élément allongé (1, 32) comportent des vides dans leurs extrémités et dans lequel la pièce d'assemblage (33) est destinée à être logée à friction dans les extrémités vides opposées.

23. Appareil selon la revendication 20, 21 ou 22, comprenant plusieurs pièces d'assemblage (33) et plusieurs autres éléments allongés (32) pouvant être fixés les uns aux autres et à l'élément allongé principal (1).

24. Une trousse de pièces comprenant des pièces qui sont conçues pour être assemblées de manière à former l'appareil tel que spécifié dans l'une quelconque des revendications 1 à 19.
